# EUROPEAN PATENT APPLICATION

(11) **EP 2 302 938 A2**
(43) Date of publication of application: **30.03.2011**
(21) Application number: 10009354.1
(22) Date of filing: 08.09.2010
(51) Int. Cl.: H04N 13/00

(54) **Mobile terminal**

(30) Priority: 17.09.2009 KR 20090088187; 17.09.2009 KR 20090088189
(71) Applicant: LG ELECTRONICS INC., Yeongdeungpo-gu Seoul 150-721 (KR)
(72) Inventor: Kim, Chang Jae, Seoul 153-801 (KR); Lee, Jae Wook, Seoul 153-801 (KR); Choi, Tae Wha, Seoul 153-801 (KR); Ok, Sun Cheon, Seoul 153-801 (KR); Kim, Kyoung Yong, Seoul 153-801 (KR); Won, Chang Bai, Seoul 153-801 (KR); Lim, Seung Geun, Seoul 153-801 (KR)
(74) Representative: Katérle, Axel

(57) **Abstract**

A mobile terminal having a user input unit is discussed, by which various visual effects including a 3-dimensional effect can be provided to an exterior of the mobile terminal. The present invention includes a display unit, a control unit configured to control the display unit, a body configured to load the display unit, and a 3D (3-dimensional) member provided to at least one partial region of the body, including a lens sheet configured to arrange convex lenses in a grid form, and a transparent sheet provided under the lens sheet, wherein a pattern of a specific is printed on a position corresponding to a focal distance of the convex lenses of the lens sheet.

## Description

### Cross Reference to Related Applications

This application claims the benefit of earlier filing date and right of priority to Korean Application No. 10-2009-0088187, filed on September 17, 2009 and Korean Application No. 10-2009-0088189, filed on September 17, 2009, the contents of which are hereby incorporated by reference herein in their entirety.

### BACKGROUND OF THE INVENTION

### Field of the Invention

The present invention relates to a mobile terminal, and more particularly, to a mobile terminal having a user input unit. Although the present invention is suitable for a wide scope of applications, it is particularly suitable for providing various visual effects including a 3-dimensional effect to an exterior of the mobile terminal.

### Discussion of the Related Art

Generally, terminals can be classified into mobile terminals and stationary terminals according to a presence or non-presence of mobility. And, the mobile terminals can be further classified into handheld terminals and vehicle mount terminals according to availability for hand-carry.

As functionality of the mobile terminal tends to be diversified, the mobile terminal is implemented as a multimedia player type equipped with composite functions including picture or video photographing, music or video file playback, games, broadcast reception and the like for example.

Recently, a mobile terminal equipped with a communication function and the like is frequently used as a communication means. Moreover, the mobile terminal tends to be equipped with a data processing function, a multimedia function and the like in various ways together with a function of the communication means. Thus, it becomes vaguer to discriminate the mobile terminal from a computer and the like.

In case of selecting such a mobile terminal, a consumer is able to select a mobile terminal according to sensitive and emotional satisfaction including a design of the mobile terminal and the like as well as the above described functions. Thus, an exterior of a mobile terminal plays a major role in selecting mobile terminals.

Generally, a mobile terminal equipped with a communication function can be classified by a bar type (e.g., a full touchscreen type, etc.), a folder type, a slide type or the like.

In case of the bar type, a battery and/or the like is (detachably) provided to a backside of a body. In case of the folder type, a battery and/or the like is (detachably) provided to a backside of a lower body. A camera, a flash for providing an illumination function required for photographing and the like are provided thereto. Yet, a size of a used are is relatively smaller than a space size. And, its design is too simple.

Designs and configurations of the battery provided backsides of the body and the like are mostly similar to each other. And, it is not easy to diversify the corresponding designs. Therefore, the demand for a method of increasing user's interest and satisfaction in a manner of diversifying a design of a front face of a mobile terminal or a design of a surface housing is rising.

Meanwhile, every mobile terminal can be provided with at least one display unit and at least one user input unit. Except a case of a mobile terminal of a full touchscreen type, the user input unit can be provided in a manner that a plurality of input keys are provided to a front or lateral face of a body housing.

In general, an input key included in a user input unit can be provided with an illumination function. Each input key is inscribed with a symbol, pattern and/or the like to provide an identity symbol.

However, the above-described input key included in the user input unit is used as an input means for inputting a user input and decreases an area occupied by the display unit. Recently, a mobile terminal tends to extend an area of a display unit by reducing a waste of an area consumed by a user input unit.

Moreover, since most of user inputs are similar to each other in design and/or configuration, it is difficult to diversify the designs and the like. Therefore, the demand for a method of enhancing user's interest and satisfaction by diversifying a front or top face design of a mobile terminal including a user input unit is ongoing to rise.

### SUMMARY OF THE INVENTION

Accordingly, the present invention is directed to a mobile terminal that substantially obviates one or more problems due to limitations and disadvantages of the related art.

An object of the present invention is to provide a mobile terminal, by which various visual effects including a 3-dimensional effect can be provided to an exterior of the mobile terminal via illumination.

Another object of the present invention is to provide a mobile terminal, by which a user input unit of the mobile terminal can be provided with various visual effects including a 3-dimensional effect.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a display unit, a control unit configured to control the display unit, a body configured to load the display unit, and a 3D (3-dimensional) member provided to at least one partial region of the body including a lens sheet configured to arrange convex lenses in a grid form, and a transparent sheet provided under the lens sheet, wherein a pattern of a specific is printed on a position corresponding to a focal distance of the convex lenses of the lens sheet.

Accordingly, the present invention provides the following effects and/or advantages.

First of all, the present invention is able to provide a mobile terminal having an exterior and/or user input unit provided with various visual effects including a 3D effect.

Secondly, the present invention diversifies designs of a front face, surface housing and/or user input unit of a mobile terminal, thereby enhancing user's interest and satisfaction.

Thirdly, the present invention enables a surface housing and/or user input unit of a mobile terminal to be configured with a 3D effect and also provides an illumination function thereto, thereby further providing the surface housing and/or user input unit with fancy and colorful visual effects.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2 is a front perspective diagram of a mobile terminal according to one embodiment of the present invention;

FIG. 3 is an exploded perspective diagram of a housing of a mobile terminal according to one embodiment of the present invention;

FIG. 4 is a diagram of a 3-dimensional (3D) member according to one embodiment of the present invention;

FIG. 5 is a diagram for describing how a mobile terminal according to one embodiment of the present invention operates;

FIG. 6 is a diagram of various examples of a cross-sectional diagram of the mobile terminal shown in FIG. 5;

FIG. 7 is a diagram for describing how a mobile terminal according to another embodiment of the present invention operates;

FIG. 8 is a diagram of various examples of a cross-sectional diagram of the mobile terminal shown in FIG. 7;

FIG. 9 is a layout of a bottom surface of a light guide plate (LGP) loaded in a mobile terminal according to one embodiment of the present invention;

FIG. 10 is a perspective diagram of a mobile terminal according to a further embodiment of the present invention;

FIG. 11 is a front perspective diagram of a mobile terminal according to a further embodiment of the present invention;

FIG. 12 is a rear perspective diagram of a mobile terminal according to a further embodiment of the present invention;

FIG. 13 is a layout of a first user input unit of the mobile terminal shown in FIG. 11;

FIG. 14 is an exploded perspective diagram of a first user input unit of the mobile terminal shown in FIG. 11;

FIG. 15 is a cross-sectional diagram of a first user input unit of the mobile terminal shown in FIG. 11;

FIG. 16 is a layout of a second user input unit of the mobile terminal shown in FIG. 11;

FIG. 17 is an exploded perspective diagram of a second user input unit of the mobile terminal shown in FIG. 11; and

FIG. 18 is a cross-sectional diagram of a second user input unit of the mobile terminal shown in FIG. 11.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators.

However, by way of non-limiting example only, further description will be with regard to a mobile terminal 100, and it should be noted that such teachings may apply equally to other types of terminals.

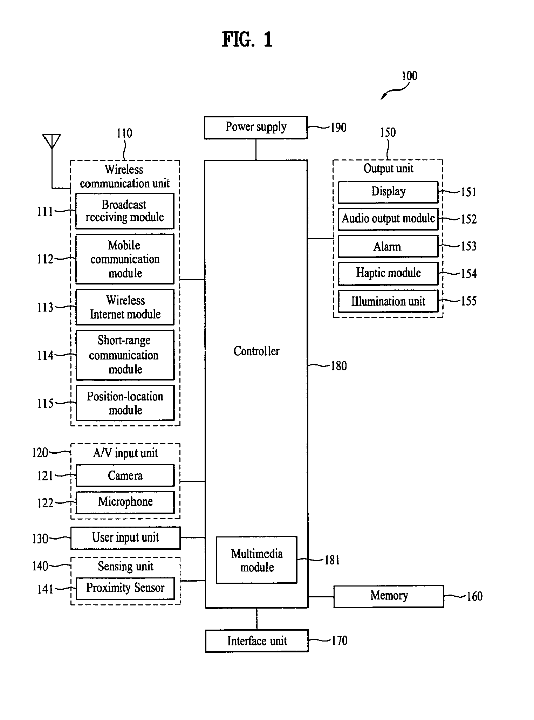

FIG. 1 is a block diagram of a mobile terminal 100 in accordance with an embodiment of the present invention.

FIG. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

The wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal.

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Meanwhile, the A/V (audio/video) input unit 120 is configured to input an audio signal or a video signal and can include a camera module 121, a microphone module 122 and the like. The camera module 121 processes an image frame of a still or moving picture obtained by an image sensor in a video call mode or a photographing mode. And, the processed image frame can be displayed on the display 151.

The image frame processed by the camera module 121 is stored in the memory 160 or can be externally transmitted via the wireless communication unit 110. At least two camera modules 121 can be provided according to a configuration type of the terminal.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad such as static pressure/capacitance, a jog wheel and a jog switch. A specific example is one in which the user input unit 130 is configured as a touchpad in cooperation with a display, which will be described in more detail below.

The sensing unit 140 detects such a current configuration of the mobile terminal 100 as an open/closed configuration of the mobile terminal 100, a location of the mobile terminal 100, a presence or non-presence of user contact and the like and then generates a sensing signal for controlling an operation of the mobile terminal 100.

For instance, if the mobile terminal 100 is a slide phone type, the sensing unit 140 is able to sense whether a slide phone is open or closed. And, the sensing unit 140 is responsible for sensing functions related to a presence or non-presence of power supply of the power supply 190, an external device loading of the interface unit 170 and the like.

The output unit 150 is configured to output an audio signal, a video signal and/or an alarm signal. And, the output unit 150 can include the display 151, an audio output module 152, an alarm output module 153, a haptic module 154, an illumination unit 155 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call.

The display 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays. For instance, both an outer display (not shown in the drawing) and an inner display (not shown in the drawing) can be provided to the mobile terminal 100.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The illumination unit 155 can be provided for various illumination effects of the mobile terminal 100. For instance, recently, mobile terminals tend to provide a user input unit with an illumination function. For this, the illumination unit 155 can be provided separate from a backlight of the display unit 151. And, the illumination unit 155 can include light emitting diodes (LED) and the like, which shall be described later in this disclosure.

The memory 160 can store programs for the processing and control of the controller 180 and is also able to perform a function for temporary storage of inputted/outputted data (e.g., phonebook data, message data, still picture data, moving picture data, etc.). Moreover, the memory 160 can store data of various patterns of vibration and sound outputted in case of the touch input to the touchscreen.

The memory 160 can include at least one storage medium of such a type as a flash memory type, a hard disk type, a multimedia card micro type, a card type memory (e.g., SD memory, XD memory, etc.), RAM and ROM. Moreover, the mobile terminal 100 is able to operate a web storage that performs a storage function of the memory 160 on internet.

The interface unit 170 plays a role as an interface with every external device connected to the mobile terminal 100. For instance, the external devices include a wire/wireless headset, an external electricity charger, a wire/wireless data port, a card socket (e.g., memory card socket, SIM/UIM card socket, etc.), audio I/O (input/output) terminals, video I/O (input/output) terminals, earphones, etc. The interface unit 170 receives data from the external device or is supplied with power. The interface unit 170 then delivers the received data or the supplied power to the corresponding component within the mobile terminal 100 or transmits data within the portable terminal 100 to the corresponding external device.

The controller 180 normally controls overall operations of the mobile terminal 100. For instance, the controller 180 performs the control and processing related to speech call, data communication, video call and the like. And, the controller 180 can be provided with a multimedia play module 181 for multimedia playback as well. The multimedia playback module 180 can be configured as hardware within the controller 180 or software separate from the controller 180.

The power supply 190 receives an external and/or internal power source and then supplies power required for operations of the respective components, under the control of the controller 180.

In the above description so far, the mobile terminal according to the present invention is described in aspect of components according to functions. In the following description, a mobile terminal according to the present invention is explained in aspect of components according to an exterior.

In the following description, for clarity, a slider type mobile terminal is selected for example from mobile terminals of various types including a folder type, a bar type, a swing type, a slider type and the like. Therefore, the present invention is non-limited by the slider type mobile terminal but is applicable to mobile terminals of all types including the above-mentioned types.

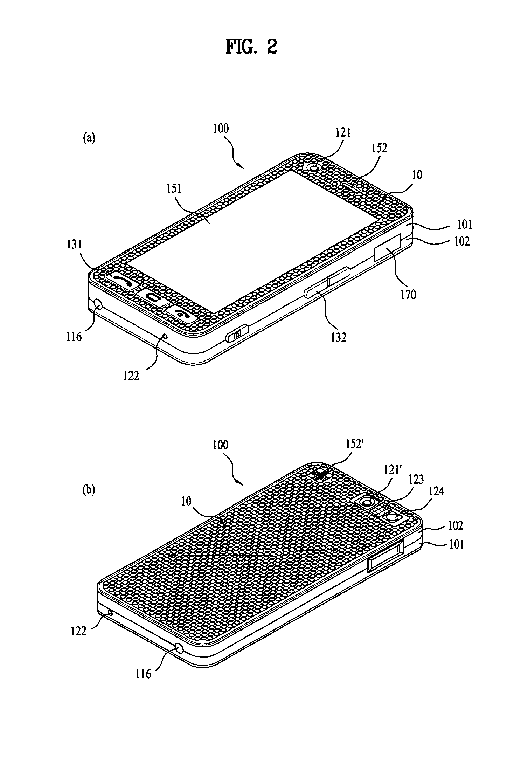

FIG. 2 is a front perspective diagram of a mobile terminal according to one embodiment of the present invention. In particular, FIG. 2 (a) is a perspective diagram of a mobile terminal according to one embodiment of the present invention, in which a front face of the mobile terminal is viewed.

Referring to FIG. 2, of a mobile terminal according to one embodiment of the present invention includes a display unit, at least one housing having at least one opening to enclose the display unit, a 3D member attached to the opening of the housing, the 3D member including a lens sheet having convex lens arranged thereon in a grid form and a transparent sheet provided under the lens sheet in a manner of having a pattern of a specific shape printed on a bottom face, a light source unit including a light guide plate provided under the 3D member and at least one LED provided next to a lateral side of the light guide plate, and a control unit (not shown) controlling the display unit and the light source unit.

The mobile terminal 100 shown in FIG. 2 has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

The terminal body includes a housing configuring an exterior thereof. In the present embodiment, the housing can be divided into a front housing 101 and a rear housing 102. Various electric/electronic parts are loaded in a space provided between the front and rear housings 101 and 102. Optionally, at least one middle housing can be further provided between the front and rear housings 101 and 102 in addition.

The housings 101 and 102 are formed by injection molding of synthetic resin or can be formed of metal substance such as stainless steel (STS), titanium (Ti) or the like for example.

A display unit 151, an audio output unit 152, a camera 121, user input units 130/131 and 132, a microphone 122, an interface 170 and the like can be provided to the terminal body.

Moreover, a mobile terminal according to the present invention includes a 3D (3-dimensional) member 10 attached to the opening of the housing. In particular, the 3D member 10 includes a lens sheet having convex lens arranged in a grid form on an outer surface of the front housing 101 and a transparent sheet provided under the lens sheet in a manner of having a pattern of a specific shape printed on a bottom face.

In order to give a 3D effect to the exterior of the mobile terminal by avoiding monotonous exterior of the mobile terminal, an opening is provided to the housing configuring the exterior of the mobile terminal. And, the 3D member 10 can be loaded in the opening. The 3D member 10 shall be described in detail later in this disclosure.

The display 151 occupies most of a main face of the front housing 101. The audio output unit 151 and the camera 121 are provided to an area adjacent to one of both end portions of the display 151, while the user input unit 132 and the microphone 122 are provided to another area adjacent to the other end portion of the display 151. The user input unit 132, the interface 170 and the like can be provided to lateral sides of the front and rear housings 101 and 102.

The user input unit 130 is manipulated to receive an input of a command for controlling an operation of the mobile terminal 100. And, the input unit 130 is able to include a plurality of user input units 131 and 132. The user input units 131 and 132 can be generally named a manipulating portion and may adopt any mechanism of a tactile manner that enables a user to perform a manipulation action by experiencing a tactile feeling.

Contents inputted by the first/second user input units 131/132 can be diversely set. For instance, such a command as start, end, scroll and the like is inputted to the first user input unit 131. And, a command for a volume adjustment of sound outputted from the audio output unit 152, a command for a switching to a touch recognizing mode of the display 151 or the like can be inputted to the second user input unit 132.

FIG. 2 (b) is a perspective diagram of a backside of the terminal shown in FIG. 2 (a).

Referring to FIG. 2 (b), a camera 121' can be additionally provided to a backside of the terminal body, and more particularly, to the rear housing 102. The latter camera 121' has a photographing direction that is substantially opposite to that of the former camera 121 shown in FIG. 2 (a) and may have pixels differing from those of the former camera 121.

Preferably, for instance, the former camera 121 has low pixels enough to capture and transmit a picture of user's face for a video call, while the latter camera 121' has high pixels for capturing a general subject for photography without transmitting the captured subject immediately. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected on the mirror 124.

An additional audio output unit 152' can be provided to the backside of the terminal body. The additional audio output unit 152' is able to implement a stereo function together with the former audio output unit 152 shown in FIG. 2 (a) and may be used for implementation of a speakerphone mode in talking over the terminal.

A broadcast signal receiving antenna 116 can be additionally provided to the lateral side of the terminal body as well as an antenna for communication or the like. The antenna 116 constructing a portion of the broadcast receiving module 111 shown in FIG. 1 can be retractably provided to the terminal body.

A power supply unit 190 for supplying a power to the mobile terminal 100 is provided to the terminal body. And, the power supply unit 190 can be configured to be built in the terminal body. Alternatively, the power supply unit 190 can be configured to be detachably connected to the terminal body.

Like the front housing 101 shown in FIG. 2 (a), a 3D (3-dimensional) member 10 attached to the opening of the housing can be provided. In particular, the 3D member 10 includes a lens sheet having convex lens arranged in a grid form on an outer surface of the rear housing 102 and a transparent sheet provided under the lens sheet in a manner of having a pattern of a specific shape printed on a bottom face.

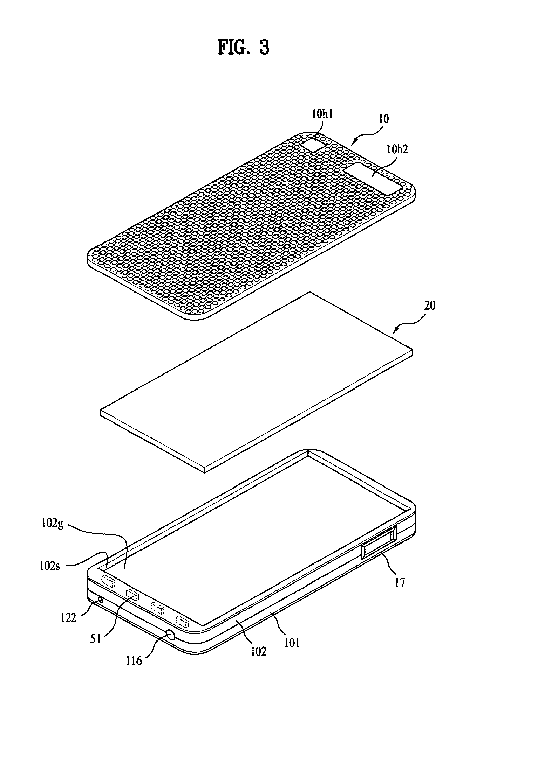

FIG. 3 is an exploded perspective diagram of a housing of a mobile terminal according to one embodiment of the present invention. Particularly, FIG. 3 is an exploded perspective diagram of the 3D member 10 attached to the backside of the mobile terminal shown in Fig. 2 (b). To avoid redundant description of the same part, for clarity, the following description is for the exploded perspective diagram of the backside of the mobile terminal shown in FIG. 2 (b). Therefore, a location, to which the 3D member 10 is applied, is non-limited by the backside of the mobile terminal. And, the 3D member 10 is applicable to any portion that configures the exterior of the mobile terminal without limitation put on the 3D member applied location.

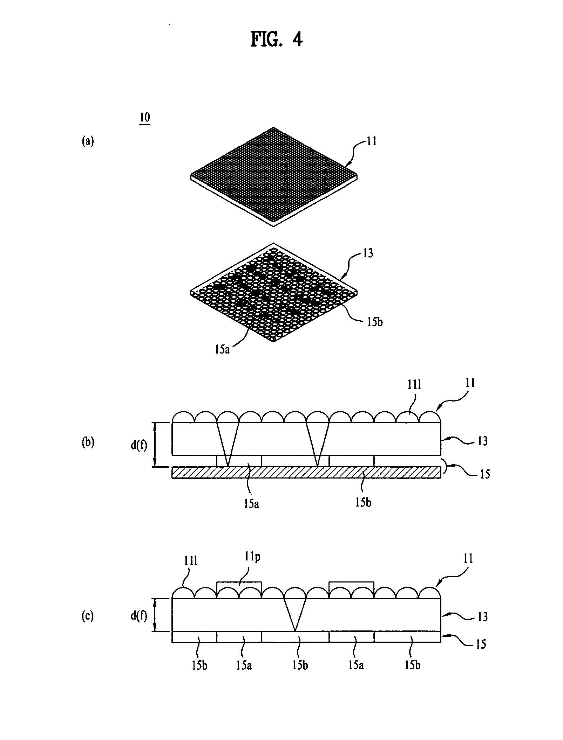

Referring to FIG. 3, a 3D (3-dimensional) member 10 is attached to an opening 102S of the rear housing 102. And, the 3D member 10 includes a lens sheet having convex lens arranged in a grid form and a transparent sheet provided under the lens sheet in a manner of having a pattern of a specific shape printed on its bottom face. This shall be described in detail with reference to FIG. 4 later in this disclosure.

The 3D member 10 can include at least one loading holes 10h1 and 10h2 so that the camera 121', the flash 123, the mirror 124, the audio output unit 152' and the like, which are provided to the backside of the mobile terminal, can be externally exposed.

The 3D member 10 gives a 3D effect of itself and is able to enhance an exterior of the mobile terminal. Moreover, the mobile terminal according to the present invention is able to give an illumination effect to maximize the 3D effect of the 3D member 10 and provide a fancy exterior.

In order to minimize a thickness increase of the mobile terminal with the illumination effect, the mobile terminal is provided with a light guide plate 20. And, it is able to provide the illumination effect using an edge mechanism for enabling light to enter a lateral side of the light guide plate 20. Alternatively, a light source is provided under the 3D member to give an illumination effect by a direct mechanism.

In order to provide the illumination effect, the light guide plate 20 is provided under the 3D member 10. In this case, the light guide plate 20 provided under the 3D member 10 can have a size and/or shape corresponding to that of the 3D member 10.

In order to provide light to the lateral side of the light guide plate 20, at least one or more light source units 51 can be further provided. The light source unit 51 can include any light source capable of giving an illumination effect to the 3D member 10. According to the present embodiment, the light source unit 51 can include at least one light emitting diode (hereinafter abbreviated LED). In the following description, the LED is indicated using the same reference number unless there is special explanation.

A plurality of LEDs 51 can be included to provide light to lateral side of edge. And, the LED 51 can be provided to an inner side of the opening 102S of the rear housing 102. The 3D member 10 and the light guide plate 20 shall be described later in this disclosure.

Meanwhile, the LED 51 can be provided under the housing (e.g., the rear housing 102). This is to minimize the brightness deviation of light emitted from the LED 51. In particular, brightness near the LED 51 is reduced in a manner of cutting of light emitted from the LED 51.

FIG. 4 is a diagram of a 3-dimensional (3D) member according to one embodiment of the present invention. In particular, FIG. 4 (a) is an exploded perspective diagram of a 3D member 10. FIG. 4 (b) is a cross-sectional diagram of one example for a 3D member 10. And, FIG. 4 (c) is a cross-sectional diagram of another example for the 3D member 10.

A mobile terminal according to the present invention includes a 3D member 10 to give a 3D effect to a user input unit. The 3D member 10 is attached to the opening of the housing 102. And, the 3D member includes a lens sheet 11 having convex lens 111 arranged in a grid form and a transparent sheet 13 provided under the lens sheet 11 in a manner of having a pattern 15b of a specific shape printed on its bottom face.

On the lens sheet 11, a plurality of the convex lenses 111 are arranged in a grid form. Each of the convex lenses 111 has a constant focal distance d(f). A shape or pattern located at the focal distance d(f) can be observed in a manner of being enlarged.

The transparent sheet 13 formed of a transparent light-transmittive material is provided under the lens sheet 11. In this case, the transparent sheet 13 can have a preset thickness.

The pattern 15b of the specific shape can be printed on a bottom surface of the transparent sheet 13.

The pattern 15b of the specific shape can be printed on a location corresponding to the focal distance d(f) of the convex lens 111. And, the pattern 15b of the specific shape printed on the location corresponding to the focal distance d(f) of the convex lens 111 is observed by being enlarged greater than a real size of the pattern.

Thus, the pattern 15b of the specific shape is printed on the location corresponding to the focal distance d(f) of the convex lens 111 of the lens sheet 11, thereby giving a 3D effect with a fabulous visual effect.

In addition to the pattern 15b of the specific shape, various identity symbols, characters, numerals 15a and the like can be further printed on the 3D member 10. In this case, since the identity symbols, characters, numerals 15a and the like are printed not to provide the 3D effect but to be used as indications for specific identifications, they need not to be enlarged by the convex lenses 111.

To enable the identity symbol, character or numeral 15a to be observed without being enlarged by the convex lens 111, the identity symbol, character or numeral 15a is printed at a height different from the focal distance d(f) of the convex lens 111 or image enlargement by the convex lens 111 is cut off.

FIG. 4 (b) is a cross-sectional diagram of one example for a 3D member 10.

Referring to FIG. 4 (b), the identity symbol, character or numeral 15a can be first printed on the bottom surface of the transparent sheet 13. This enables the identity symbol, character or numeral 15a to be printed at a location closer than the focal distance d(f) of the convex lens 111.

Thus, in a manner of printing the identity symbol, character or numeral 15a over the pattern 15b of the specific shape, the pattern 15b of the specific shape printed in the focal distance d(f) of the convex lens 111 gives a 3D effect by being enlarged by the convex lens 111. And, the identity symbol, character or numeral 15a printed over the pattern 15b of the specific shape can have a visual effect in a manner of floating over the pattern 15 of the specific shape.

Preferably, the pattern 15b of the specific shape can have one of various configurations. For example, the pattern 15b of the specific shape can be configured in a manner that the same figure is repeated in a specific direction.

FIG. 4 (c) is a cross-sectional diagram of another example for the 3D member 10.

Referring to FIG. 4 (c), the 3D member 10 includes a transparent resin layer 11p provided on a specific region of a top surface of the lens sheet 11, unlike the former 3D member 10 shown in FIG. 4 (b).

Unlike the former example shown in FIG. 4 (b), according to the latter example shown in FIG. 4 (c), both of the pattern 15b of the specific shape and one of the identity symbol, character and numeral 15a printed on the bottom surface of the transparent sheet 13 are simultaneously printed in the focal distance d(f) of the convex lens 11 provided to the lens sheet 11. If both of the pattern 15b of the specific shape and the identity symbol, character or numeral 15a are simultaneously printed in the focal distance d(f), it is able to simplify a fabrication process.

The transparent resin layer 11p is provided to the specific region of the lens sheet 11 to cancel out a lens effect (enlargement effect) caused by the convex lens 111 of the lens sheet 11.

Particularly, the transparent resin layer 11p is provided to enable the identity symbol, character or numeral 15a, for which a 3D effect is not requested, to be observed in a real shape without being enlarged by the convex lens 111 of the lens sheet 11.

Thus, in a manner of providing the transparent resin layer 11p to the top surface of the lens sheet 13 located over the identity symbol, character or numeral 15a, it is able to selectively give an enlargement effect due to the convex lens 111 of the lens sheet 11.

Therefore, in a manner of removing the lens effect from a necessary portion by adding the transparent resin layer 11p to the lens sheet 11 selectively, it is able to clearly observe the identity symbol, character or numeral 15a.

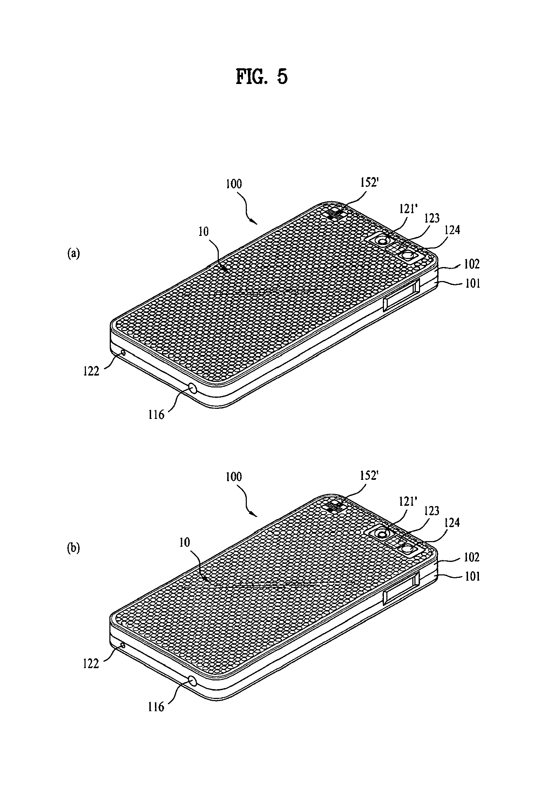

FIG. 5 is a diagram for describing how a mobile terminal according to one embodiment of the present invention operates. In particular, FIG. 5 (a) shows a state that the 3D member 10 is loaded in the rear housing 102 configuring the backside of the mobile terminal 100 and a state that the LED 51 configured to provide an illumination function is turned off. And, FIG. 5 (b) shows a state that the 3D member 10 is loaded in the rear housing 102 configuring the backside of the mobile terminal 100 and a state that the LED 51 configured to provide an illumination function is turned on. The redundant descriptions with reference to FIGs. 2 to 4 shall be omitted from the following description.

Referring to FIG. 5, although the LED 51 is turned off, the pattern 15b of the specific shape printed on the 3D member 10 can give a 3D effect to the exterior of the mobile terminal according to the lens effect.

Yet, if the LED 51 is turned on, referring to FIG. 5 (b), an illumination can be provided to the bottom surface of the 3D member 10.

Once the illumination is provided to the 3D member 10, it is able to provide the 3D member 10 with a fancy exterior attributed to the illumination as well as various 3D effects.

In particular, the pattern 15b of the specific shape can provide the 3D effect and visual variations of itself. In addition, if the illumination is provided to the 3D member 10, the pattern 15b of the specific shape can provide a fancy design with a 3D effect.

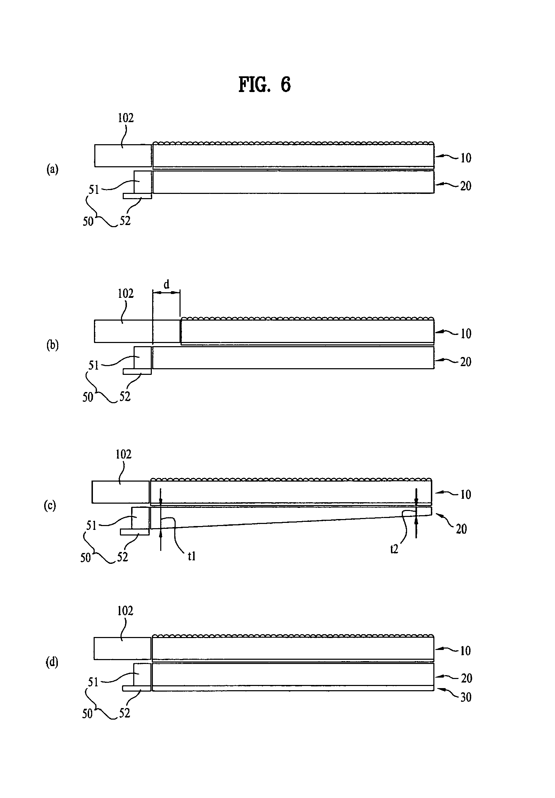

FIG. 6 is a diagram of various examples of a cross-sectional diagram of the mobile terminal shown in FIG. 5.

Referring to FIG. 6 (a), an illumination can be provided in a following manner. First of all, a 3D member 10 is loaded in an opening provided to a housing 102 configuring an exterior of a mobile terminal. A light guide plate 20 is provided under the 3D member 10. And, a light source unit 51 is provided next to a lateral side of the light guide plate 20. Thus, an illumination can be provided.

An LED 51 is loaded in a circuit board 52 and constructs an illumination unit 50 together with the circuit board 52.

Light provided from the LED 51 is totally reflected into the light guide plate 20, is transferred in right direction, is projected on a top surface of the light guide plate 20, i.e., on a light projection plane, and then provides an illumination to the 3D member 10. Therefore, it is able to provide a fancy visual effect.

Referring to FIG. 6 (b), the light guide plate 20 is extended under the housing 102 in part, unlike FIG. 6 (a). In particular, the light guide plate 20 can be loaded in a manner that one end portion of the light guide plate 20 is extended by an insertion depth d into the housing 102.

As the light guide plate 20 is loaded in a manner of being extended toward the housing 102, an installation position of the LED 51 constructing the illumination unit 50 is further deepened into the housing 102 as well.

According to the example shown in FIG. 6 (a), in which the LED 51 is provided to a boundary region of the opening, if the LED 51 is turned on, brightness deviation of the 3D member 10 may become considerable due to a brightness difference of the LED 51. In particular, the light provided by the LED 51 is projected in a slightly slanting direction without experiencing total reflection within the light guide plate 20, whereby uniformity of the brightness may be degraded. Referring to FIG. 6 (b), the light guide plate 20 is extended toward the housing 102 and the LED 51 is arranged within the housing 102, whereby the brightness deviation at a left end portion of the 3D member 10 can be minimized. Particularly, in the overlapped area between the light guide plate 20 and the housing 102, the housing 102 plays a role as a cover amounting to the insertion depth d of the light guide plate 20 in blocking the light directly projected from the LED 51.

FIG. 6 (c) differs from FIG. 6 (a) in that the light guide plate 20 has a thickness inverse proportional to a distance from the LED 51.

In particular, a reduced light intensity is compensated by gradually reducing the thickness of the light guide plate 20, whereby the deviation of the brightness of the illumination provided by the #d member 10 can be minimized.

The thickness of the light guide plate 20 is set to t1 at a left end portion, while the thickness of the light guide plate 20 is set to t2 (t1 > t2) at a right end portion. FIG. 6 (c) shows an example that the thickness of the light guide plate 20 gradually decreases from the beginning to the end, by which the present invention is non-limited. If there a thickness variation in a partial section, the same effect can be obtained in part.

FIG. 6 (d) differs from FIG. 6 (a) in that a reflective plate 30 is further provided under the light guide plate 20. The illumination effect is provided in a manner that the light diffuses in part in the course of total reflection within the light guide plate 20 to be projected to a light projection plane. Yet, since the light projection may occur on a bottom surface of the light guide plate 20, the reflective plate 30 can be provided to supply the meaninglessly diffusing light, which is projected via the bottom surface of the light guide plate 20, into the light guide plate 20 in a manner that the diffusing light is reflected again on the reflective plate 30.

The reflective plate 30 can be provided as such a sheet as a film and the like. Alternatively, the reflective plate 30 can be provided in a manner that the bottom surface of the light guide plate 20 is directly coated with the reflective material.

Each of the above examples described with reference to FIGs. 6 (a) to 6 (d) has individual features based on the example shown in FIG. 6 (a). In particular, the features disclosed in FIGs. 6 (b) to 6 (c) can be individually adopted. And, it is apparent that two or three of the features are applicable to the mobile terminal to reduce the brightness deviation of the illumination on the top face of the 3D member 10 or increase overall brightness thereof.

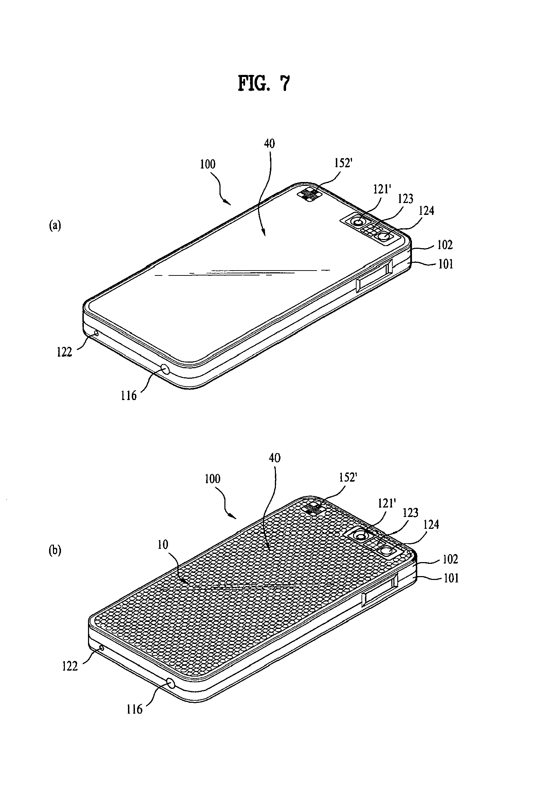

FIG. 7 is a diagram for describing how a mobile terminal according to another embodiment of the present invention operates. In particular, FIG. 7 (a) shows a state that the 3D member 10 is loaded in the rear housing 102 configuring the backside of the mobile terminal 100 and a state that the LED 51 of the illumination unit configured to provide an illumination function is turned off. And, FIG. 7 (b) shows a state that the 3D member 10 is loaded in the rear housing 102 configuring the backside of the mobile terminal 100 and a state that the LED 51 of the illumination unit configured to provide an illumination function is turned on. The redundant descriptions with reference to FIGs. 2 to 6 shall be omitted from the following description.

The present embodiment shown in FIG. 7 differs from the former embodiment shown in FIG. 5 in that a depositing member 40 is additionally provided on the 3D member 10 loaded in the rear housing 102 configuring the backside of the mobile terminal 100.

The depositing member 40 performs metallic deposition processing on a film or plate of a light-transmittive material to vary whether observation is possible according to brightness of an object under the depositing member 40.

Referring to FIG. 7 (a), while the Led configuring the illumination unit is turned off, a pattern or the like of the 3D member 10 located underneath is not observed well. Referring to Fig. 7 (b), while the LED configuring the illumination unit is turned on, the pattern 15b of the specific shape provided to the 3D member 10 can be observed despite the presence of the depositing member.

In particular, while the LED is turned off, it is able to obtain a mirror effect as if there exists a mirror. While the LED is turned on, a fancy design of the pattern is observed to provide a user with fancy feeling.

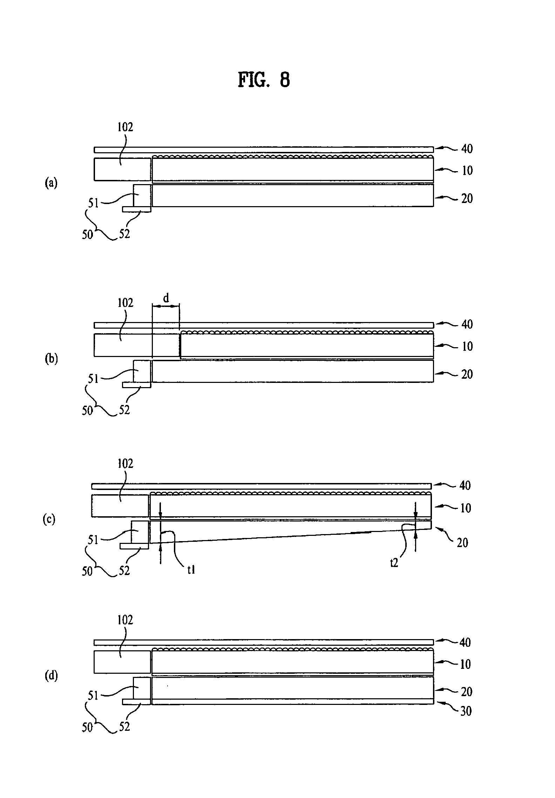

FIG. 8 is a diagram of various examples of a cross-sectional diagram of the mobile terminal shown in FIG. 7. In the following description, the redundant part of the description with reference to FIG. 6 is omitted.

Referring to FIG. 8, the depositing member 40 is arranged over the 3D member 10. The depositing member 40 can include a separate member. Alternatively, the top surface of the 3D member 10 can be directly coated with the depositing member 40. Examples shown in FIG. 8 are based on FIG. 8 (a). And, the examples shown in FIGs. 8 (b) to 8 (d) include individual features, respectively. Examples for combining at least two of the features are not shown in FIG. 8. Yet, on the assumption of the structure shown in FIG. 8 (a), two or three of the features are adopted and applied to one mobile terminal to reduce deviation of brightness of the illumination on the top surface or increase overall brightness. This is as good as the former examples shown in FIG. 6.

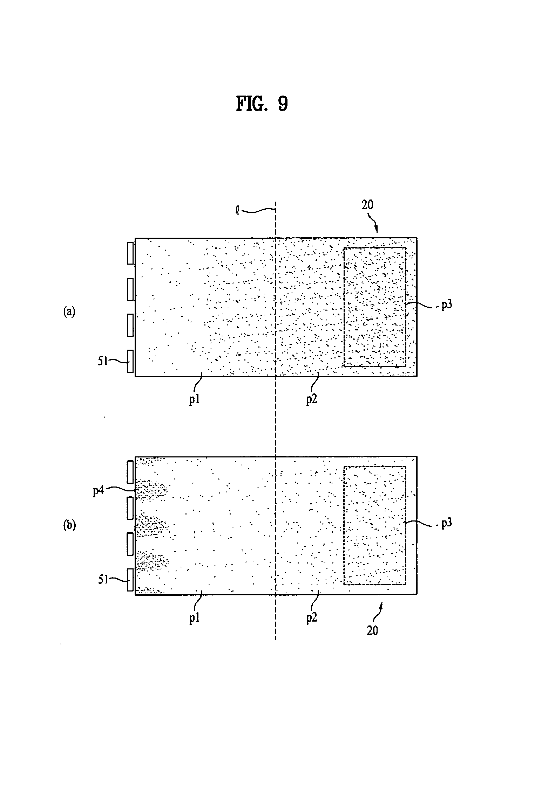

FIG. 9 is a layout of a bottom surface of a light guide plate (LGP) loaded in a mobile terminal according to one embodiment of the present invention.

Referring to FIG. 9, a plurality of light extracting patterns can be provided to a top or bottom surface of the light guide plate 20. The light extracting patterns mean microgrooves, microscratches or the like to artificially control brightness of an illumination by the light guide plate 20 in a manner of artificial image formation of propagating light.

Density of the light extracting patterns can be formed on the top or bottom surface of the light guide plate 20 in proportion to a distance from the LED 51.

In particular, the light extracting patterns can be formed on the bottom or top surface of the light guide plate 20. Density of the light extracting patterns is raised in a relatively dark area but is lowered in a relatively bright area or the light extracting patterns are omitted from the relatively bright area.

Referring to FIG. 9, the bottom surface of the light guide plate 20 is divided into a left plane p1 and a right plane p2 by a partitioning line 1 vertical to a light propagating direction. In this case, the partitioning line 1 is a virtual partitioning line for clarity and convenience of the description but is not actually marked on the light guide plate 20.

The pattern density of the right plane p2 farther from the LED 51 than the left plane p1 needs to be overall raised higher than that of the left plane p1. And, the density of the light extracting patterns can gradually increase if it gets farther from the LED 51.

In the description of FIG. 6 (c), the thickness of the light guide plate 20 is gradually reduced. Likewise, the pattern density can be raised to prevent the brightness from being lowered if the distance from the LED 51 increases. A third region p3 within the right plane p2 can be regarded as a region in which the density gradually increases.

The overall pattern formation of the example shown in FIG. 9 (b) is as good as that shown in FIG. 9 (a). Yet, density of the patterns in a plurality of spaced regions p4 corresponding to a region, in which a plurality of the LEDs 51 spaced apart from each other, among the adjacent regions of the LEDs 51 in the left plane p1 is locally raised.

Although the spaced region p4 is close to the LED 51, it exists between the light incident regions to become a relatively dark region. Therefore, although the absolute brightness is not dark, it is able to raise the pattern density in the vicinity of the LED 51 in order to reduce the brightness deviation that may be generated from spacing a plurality of the LEDs 51 apart from each other.

Thus, by the method of forming the patterns on the top or bottom surface of the light guide plate 20, the method of gradually reducing the thickness of the light guide plate 20 or the method of providing the reflective plate or the like, it is able to raise the brightness of the illumination provided to the 3D member 10 or minimize the brightness deviation.

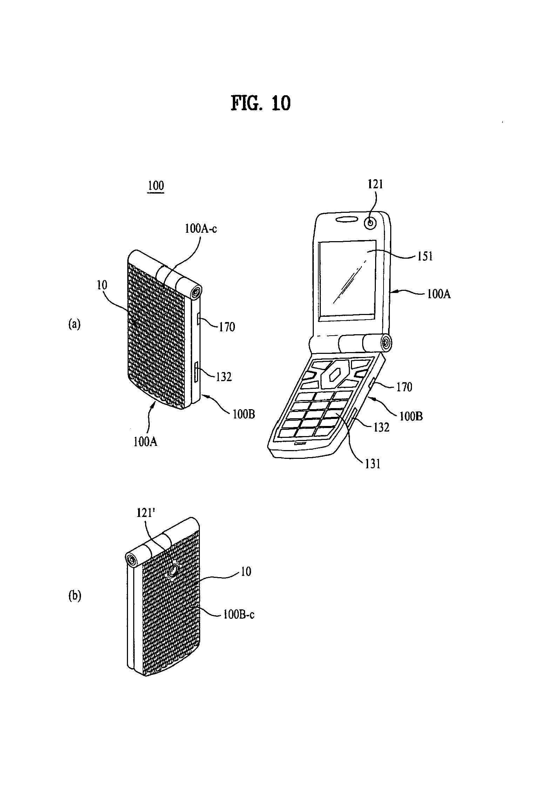

FIG. 10 is a perspective diagram of a mobile terminal according to a further embodiment of the present invention.

Referring to FIG. 10, a mobile terminal according to a further embodiment of the present invention includes a first body 100A having a display unit 151 and a first cover 100A-c enclosing a side opposing the display unit 151, a second body 100B having at least one user input unit 131 and a second cover 100B-c enclosing a side opposing the at least one user input unit 131, the second body 100B configured to be rotatably or slidably combined with the first body 100A, a 3D member 10 having a lens sheet and a transparent sheet, and a light source unit (not shown in the drawing) having a light guide plate (not shown in the drawing) provided under the 3D member 10 and at least one LED provided to a lateral side of the light guide plate. In this case, convex lenses provided to a whole or partial region of at least one of the first cover 100A-c and the second cover 100B-c are arranged in a grid form on the lens sheet. And, a pattern of a specific shape is printed on a bottom surface of the transparent sheet that is provided under the lens sheet.

According to the embodiment shown in FIG. 10, the first cover 100A-c or the second cover 100B-c is substituted for one 3D member 10.

According to the embodiment shown in FIG. 10, a mobile terminal of a folder type is shown in stead of the former full-touch mobile terminal of the bar type described with reference to FIGs. 2 to 8. In the mobile terminal shown in FIG. 10, the first body 100A having the display unit 151 and the second body 100B having the at least one user input unit 131 are hinged on each other. Optionally, the first and second bodies 100A and 100B can be slidably combined together using a slide hinge.

Thus, even if the first and second bodies 100A and 100B are displaceably combined with each other, the 3D member 10 is provided to at least one of a backside of the surface having the display unit 151 provided thereto and a backside of the surface having the user input unit 131 provided thereto, whereby an exterior with a 3D effect can be provided.

Moreover, a fancier 3D effect can be provided in a manner of loading LED and the like in the 3D member to provide an illumination effect thereto.

As mentioned in the foregoing description, instead of forming an opening to a housing configured to construct an exterior of a mobile terminal, an externally exposed part can be fabricated as a single cover.

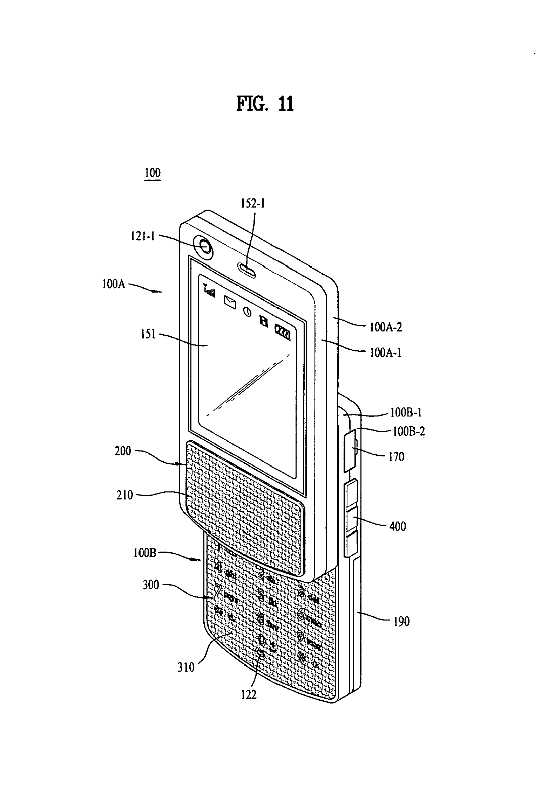

In the foregoing description, embodiments for providing the loaded member 10 and the like to the exterior of the mobile terminal are explained. In the following description, embodiments for providing a loaded member and the like to a user input unit of a mobile terminal are explained with reference to FIG. 11 and the like. In the description of the following embodiments, the loaded member is indicated by a reference number 210 or 310 to be discriminated from the former loaded member.

In the following description, for clarity, a slider type mobile terminal is selected for example from mobile terminals of various types including a folder type, a bar type, a swing type, a slider type and the like. Therefore, the present invention is non-limited by the slider type mobile terminal but is applicable to mobile terminals of all types including the above-mentioned types. Despite the difference in type, the redundant description between the bar type mentioned in the foregoing description and the folder type is omitted from the following description.

FIG. 11 is a front perspective diagram of a mobile terminal according to a further embodiment of the present invention.

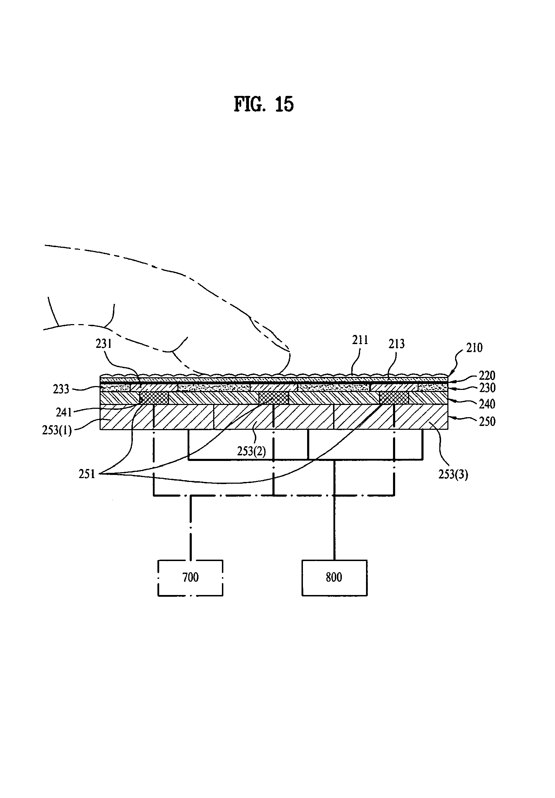

Referring to FIG. 11, a mobile terminal 100 according to a further embodiment of the present invention includes a display unit 151, a user input unit 200/300 including a 3D member 210 having a lens sheet 211 shown in FIG. 15 and a transparent sheet 213 shown in FIG. 15 provided under the lens sheet 211 and a circuit board (not shown in the drawing) having a plurality of touch sensors or a plurality of dome switches, the circuit board provided under the 3D member 210, and a controller detecting a user input inputted via the user input unit 200/300, the controller controlling the display unit 151. In this case, convex lenses are arranged in a grid form on the lens sheet 211. And, a pattern of a specific shape is printed on a bottom surface of the transparent sheet 213.

The mobile terminal 100 according to the present invention includes a first body 100A and a second body 100B configured slidable on the first body 100A along at least one direction.

If the first body 100A is arranged in a manner of being superposed on the second body 100B, it can be named a closed configuration. If the first body 100A is configured to expose at least one portion of the second body 100B, it can be named an open configuration.

In the closed configuration, the mobile terminal is mainly operable in a standby mode. And, the standby mode can be released by user's manipulation. In the open configuration, the mobile terminal is mainly operable in a call mode or the like. According to user's manipulation or expiration of prescribed duration, a mode of the mobile terminal can be switched to the standby mode.

A case (e.g., casing, housing, cover, etc.) forming an exterior of the first body 100A includes a first front case 100A-1 and a first rear case 100A-2. Various electric and/or electronic parts are loaded in a space provided by the first front case 100A-1 and the first rear case 100A-2. And, at least one or more middle cases can be additionally provided between the first front case 100A-1 and the first rear case 100A-2.

A display module 151, a first audio output module 152-1, a first camera module 121-1 and a first user input unit 120 can be provided to the first body 100A, and more particularly, to the first front case 100A-1.

The first user input unit 200 can be provided as a touchpad 200 capable of detecting a user's touch input and then converting the detected touch input to a touch signal. Regarding the touchpad 200, a circuit board provided with a touch sensor is partitioned into a plurality of touch zones. If a user's touch input is detected, the touchpad 200 generates a control signal corresponding to the touch zone to control the mobile terminal. Alternatively, like a second user input unit 300 in the following description, the first user input unit 200 includes a dome switch substituted for the touch sensor and is able to generate an input signal by pressurization.

The first user input unit 200 shown in FIG. 11 includes a 3D member 210 having a lens sheet 211 shown in FIG. 15 and a transparent sheet 213 in FIG. 15 provided under the lens sheet 211 and a circuit board (not shown in the drawing) having a plurality of touch sensors or a plurality of dome switches to be provided under the 3D member 210. In this case, convex lenses are arranged in a grid form on the lens sheet 211 and a pattern of a specific shape is printed on a bottom surface of the transparent sheet 213.

Preferably, the 3D member 210 can be provided to give a 3D effect to the first user input unit 200.

The display module 151 includes at least one of devices for representing information visually. In this case, the display module 151 includes a liquid crystal display (LCD), an organic light emitting diode (OLED) display and/or the like.

A touchpad is superposed onto the display module 151 to configure a layered structure. Therefore, the display module 151 can operate as a touchscreen to enable information to be inputted by a touch made by a user.

The first audio output module 152-1 can be implemented as a receiver or a speaker.

The first camera module 121-1 can be implemented suitable for photographing an image or video of a user and the like.

Like the first body 100A, a case forming an exterior of the second body 100B includes a second front case 100B-1 and a second rear case 100B-2.

And, a second user input unit 300 can be provided to the second body 100B, and more particularly, to a front face of the second front case 100B-1.

Like the first user input unit 200, the second user input unit 300 includes a 3D member 310 having a lens sheet and a transparent sheet provided under the lens sheet and a circuit board (not shown in the drawing) having a plurality of touch sensors or a plurality of dome switches to be provided under the 3D member 310. In this case, convex lenses are arranged in a grid form on the lens sheet and a pattern of a specific shape is printed on a bottom surface of the transparent sheet.

And, a third user input unit 400, a microphone module 122 and an interface unit 170 can be provided to at least one of the second front case 100B-1 and the second rear case 100B-2.

The first to third user input units 200, 300 and 400 can be generally called a user input unit 130. And, the user input unit can adopt any tactile manner that enables a user to perform manipulation with tactile feeling.

For instance, as mentioned in the foregoing description, the first user input unit 200 is provided as a touchpad 200. And, each of the second and third user input units 300 and 400 can be provided as a touchpad as well as the first user input unit 200.

For instance, it is able to implement the user input unit 130 with a dome switch or a touchpad, which can receive an input of a command or information by user's push or touch manipulation. Alternatively, the user input unit 130 can be implemented by such a manipulating system as a key rotating wheel, a jog, a joystick and the like.

In aspect of functionality, the first user input unit 200 is provided to input such a command as start, end, scroll and the like. And, the second user input unit 300 is provided to input numerals, characters, symbols and the like.

Moreover, the third user input unit 400 can work as a hot-key for activating a special function within the mobile terminal.

The microphone module 122 can be implemented into a form suitable for receiving an input of user's speech and other sounds.

The interface unit 170 becomes a passage for enabling the mobile terminal of the present invention to perform data exchange with an external device and the like. For instance, the interface unit 170 can include at least one of a connection terminal for connection to an earphone by wire or wireless, a port for short range communication (e.g., IrDA port, Bluetooth port, wireless LAN port, etc.) and power supply terminals for supplying power to the mobile terminal.

Since the interface unit 170 is explained in the foregoing description, its details are omitted from the following description.

The power supply unit 190 for supplying power to the mobile terminal is provided to the second rear case 100B-2.

In this case, the power supply unit 190 can be detachably provided as a rechargeable battery to the second rear case 100B-2.

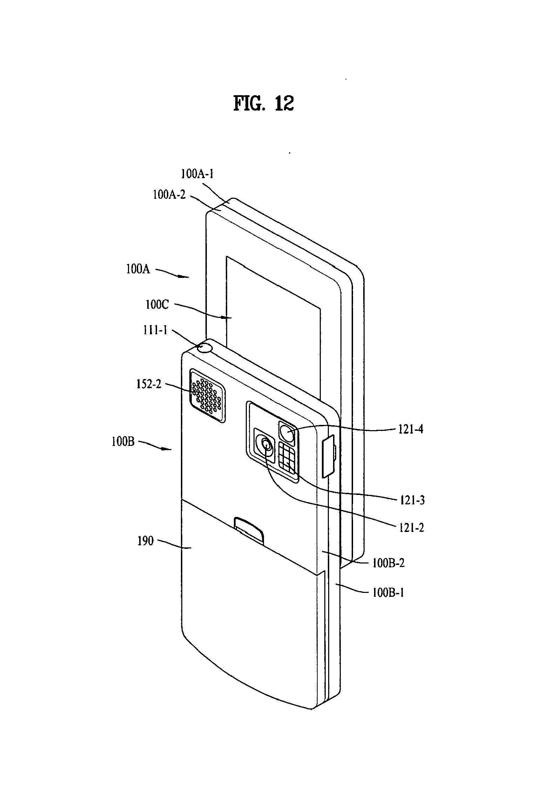

FIG. 12 is a perspective diagram for a backside configuration of the mobile terminal shown in FIG. 11.

Referring to FIG. 12, a second camera module 121-2 can be additionally provided to a backside of the second rear case 100B-2 of the second body 100B. The second camera module 121-2 has a photographing direction substantially opposite to that of the first camera module 121-1 shown in FIG. 11 and can have pixels different from those of the first camera module 121-1 shown in FIG. 11.

For instance, the first camera module 121-1 has low pixels enough for taking a picture of user's face and then transmitting the taken picture to a correspondent party in the course of a video call or the like. On the contrary, the second camera module 121-2 takes a picture of a subject but does not transmit the taken picture in general. Therefore, the second camera module 121-1 preferably has high pixels.

In the vicinity of the second camera module 121-2, a flash 121-3 and a mirror 121-4 can be additionally arranged. In case of taking a picture of a subject using the second camera module 121-2, the flash 121-3 shines light toward the subject. In case that a user attempts to take a picture of herself/himself using the second camera module 121-2 (i.e., self-photographing), the mirror 121-4 enables user's face to be reflected thereon.

A second audio output module 152-2 can be additionally provided to the second rear case 100B-2.

The second audio output module 152-2 can implement a stereo function together with the first audio output module 152-1 shown in FIG. 11 and is usable for a call in speakerphone mode.

A broadcast signal receiving antenna 111-1 can be provided to one side of the second rear case 100B-2 as well as an antenna for communication and the like. In this case, the broadcast signal receiving antenna 111-1 can be provided retractable from the second body 100B.

One portion of a slide module 100C configured to enable the first and second bodies 100A and 100B to be slidably assembled together can be provided to the first rear case 100A-2 of the first body 100A.

The other portion of the slide module 100C is provided to the second front case 100B-1 of the second body 100B, thereby avoiding being externally exposed as shown in the present drawing.

In the above description so far, the second camera module 121-2 and the like are provided to the second body 100B, by which the present invention is non-limited.

For instance, at least one of the components 111-1, 121-2, 121-3 and 152-2 provided to the second rear case 100B-2 like the second camera module 121-2 can be provided to the fist body 100A, and more particularly, to the first rear case 100A-2.

If so, it is advantageous in that the component(s) provided to the first rear case 100A-2 in the closed configuration can be protected by the second body 100B. Moreover, even if the second camera module 121-2 is not separately provided, the first camera module 121-1 is configured rotatable so as to cover a photographing direction of the second camera module 121-2.

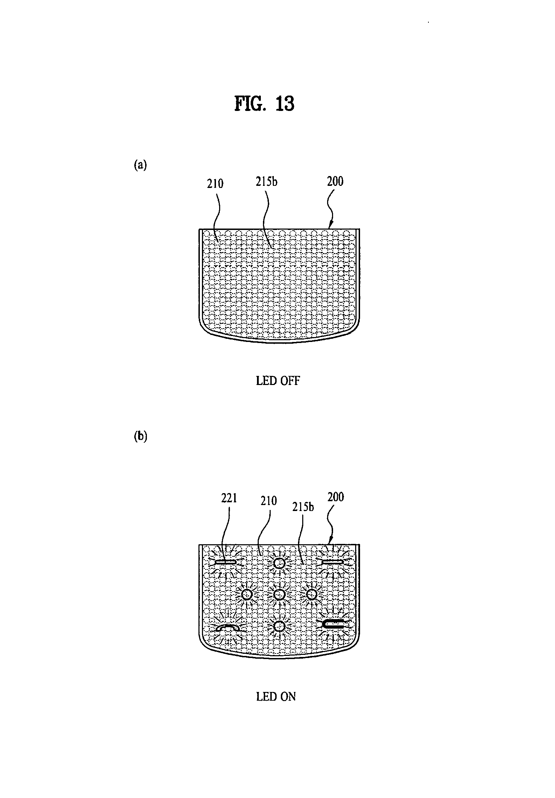

FIG. 13 is a layout of the first user input unit of the mobile terminal shown in FIG. 11. In particular, FIG. 13 (a) is a layout of LED configuring an illumination unit provided under the 3D member 310, in which the LED is turned off. And, FIG. 13 (b) is a layout of LED configuring an illumination unit provided under the 3D member 310, in which the LED is turned on.

Referring to FIG. 13, a top surface of the first user input unit 200 can include the 3D member 210. Therefore, the first user input unit 200 can obtain various 3D effects. While the LED is not activated, it is unable to observe an identity symbol, a character and the like in the first user input unit 200 [FIG. 13 (a)]. But, it is able to observe a pattern 215b of a specific shape displayed under the 3D member 210 only.

Referring to Fig. 13 (b), if the LED provided under the first user input unit 200 is activated, each identity display emits light.

Therefore, according to whether the LED is activated, the identity display for displaying a type of each user input can be displayed.

As mentioned in the foregoing description, the first user input unit 200 can include a touchpad. In this case, the touchpad detects a user's touch input and then converts the detected touch input to a touch signal.

The above configured first user input unit 200 is applicable not only to the mobile terminal but also to various electronic products widely.

Meanwhile, the 3D member 210 comes into direct contact with a user's finger and the like and is configured to be externally exposed. Moreover, the 3D member 210 can be formed of a light-transmittive plastic, resin or the like.

The 3D member 210 shown in FIG. 13 is used as a user input unit for inputting a control signal to a mobile terminal. And, the 3D member 210 is provided to input such a control signal as start, end, scroll, camera mode switching and the like. Therefore, the 3D member can be modified in various ways according to a usage, location and the like of an electronic product to which the first user input unit 200 according to the present invention is applied.

According to the embodiment shown in FIG. 13, the 3D member 210 is capable of receiving a plurality of control signals. For instance, referring to FIG. 13, a control signal for a start or end of a call can generate various controls signals according to positions of a part for receiving each touch input.

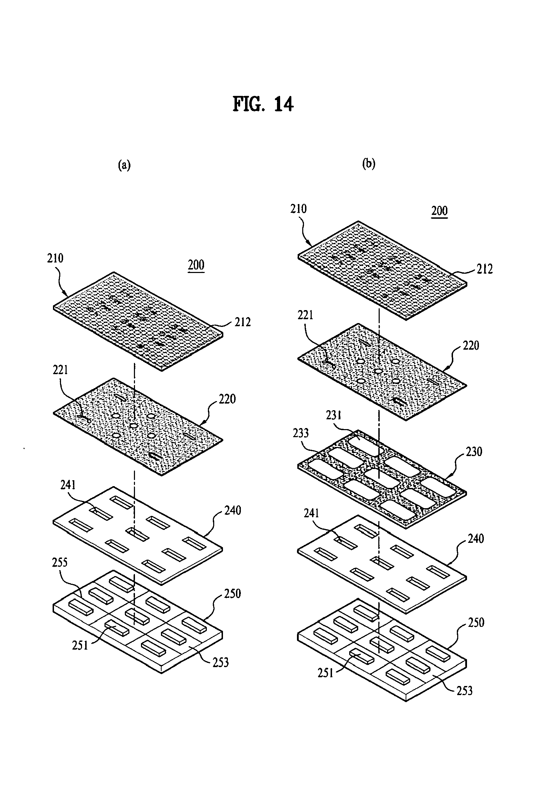

In particular, the first user input unit 200 according to the present invention is able to generate each individual control signal according to a partitioned touch zone 253 of a circuit board 250 explained in the following description with reference to FIG. 14. A partition line 255 shown in FIG. 14 is not substantially visible but is understood as a partition line for partitioning the 3D member 210 into each corresponding touch zone 253.

Moreover, the first user input unit 200 shown in FIG. 13 can be configured to enable total 9 different touch inputs.

In the following description, a configuration of the first user input unit 200 according to the present invention is explained with reference to FIG. 14.

FIG. 14 is an exploded perspective diagram of the first user input unit of the mobile terminal shown in FIG. 11.

Referring to FIG. 14 (a), the 3D member 210 is provided to a most upper part of the first user input unit 200. And, a transmittive film 220 can be provided under the 3D member 210.

In this case, the transmittive film 220 can be provided with a plurality of light transmittive portions 221 for selectively transmitting light. If the LED 251 is activated, identity symbols used to be invisible start to emit lights, respectively, as shown in FIG. 13 (b).

Thus, in order to enable an identity symbol corresponding to each user input to selectively emit light, the transmittive film 220 is provided.

A region of the transmittive film 220 except the portion corresponding to the identity symbol (or the light transmittive portion 221) can be coated with a light-blocking material.

Alternatively, in order to enable the identity symbol to selectively emit light, instead of using a separate transmittive film, a bottom surface of the 3D member 210 can be directly coated with a prescribed material.

In particular, the portion corresponding to the identity symbol, i.e., the light transmittive portion 221 is not coated with a coating material but the rest of portions are coated with the coating material, whereby light can be selectively transmitted. The latter method is advantageous in reducing a thickness of the user input unit.

A rubber board 240 can be further provided under the transmittive film 220. In particular, the rubber board 240 can be further provided between the 3D member 210 and the circuit board 250. In this case, a plurality of openings 241 is formed on the rubber board 240 to be penetrated by the LED 251.

A plurality of the openings 241 are provided to the rubber board 240 to enable the LED 251 to loaded therein. And, the tuber board 240 can be formed of a material having prescribed elasticity.

Moreover, the rubber board 240 can includes an adhesive material. If both faces of the rubber board 240 are coated with an adhesive material, it is able to enable the circuit board 250 and the member on the rubber board 240 to adhere strongly thereto.

The rubber board includes the opening 241 to transfer the light emitted from the LED 251 upward.

The LED 251 loaded on the circuit board 250 is inserted in the opening 241 so that a top side of the LED 251 can be externally exposed.

Preferably, the opening 241 provided to the rubber board 240 has a size corresponding to that of the LED 251. In particular, the size of the opening 241 is determined to enable the top side of the LED 251 to be externally exposed.

A shape of the opening 241 can correspond to that of the LED 251 loaded on the circuit board 250.

The rubber board 240 plays a role in eliminating a recess between the LED loaded circuit board 250 and the 3D member 210 or the transmittive film 220, which is provided on the rubber board 240, and also plays a role in attaching the 3D member 210 or the transmittive film 220, which is provided on the rubber board 240, and the circuit board 250 to each other.

The LED 251 loaded on the circuit board 250 is projected from the circuit board 250 with a predetermined height.

Therefore, if the rubber board 240 does not exist, the recess may be generated due to the LED 251. To eliminate the recess, the rubber board 240 can be provided in addition.

As mentioned in the foregoing description, the circuit board 250 having a plurality of the LEDs 251 loaded thereon can be provided under the rubber board 240.

The circuit board 250 includes a plurality of touch zones 253 to which a plurality of touch sensors (not shown in the drawing) for receiving user's touch inputs and then converting the received touch inputs to touch signals are provided, respectively. And, a plurality of the LEDs 251 is loaded on a plurality of the touch zones 253, respectively.

In this case, each of the touch sensors can include a capacitive touch sensor. Particularly, the capacitive touch sensor operates by detecting a variation of capacitance generated if coming into contact with a human body or a specific object. The touch sensor detects a difference between a setup value and a small capacitance, which is generated from a contact between the human body and a touch surface, and then outputs the difference finally.

One of various sensors capable of detecting a user's touch input and generating a corresponding touch signal can be used as touch sensor as well as the capacitive touch sensor.

As mentioned in the foregoing description, the touch zone 253 is a partitioned zone of the circuit board 250 corresponding to a touch input zone 212 of the 3D member 210. Each of the touch zones 253 is able to generate a control signal according to a corresponding touch input.

The LED 251 can be loaded on each of the touch zones 253 provided to the circuit board 250. In this case, when the LED 251 can be controlled to emit light if a touch signal is generated from receiving a touch input via the touch zone 253.

A plurality of the LEDs 251 can be controlled in a manner that the corresponding LED 251 loaded on the touch zone 253 having the touch input applied thereto is set to emit light only. Alternatively, a plurality of the LEDs 251 can be controlled in a manner that the rest of the LEDs 251 are set to emit lights sequentially or together with the LED 251 loaded on the touch zone 253 having the touch input applied thereto. Thus, the light emitting pattern or mechanism of the LED 251 can be diversely modified.

In case that the LED except the LED 251 loaded on the touch input applied touch zone 253 is also turned on, it is preferable that the LED 251 loaded on the touch input applied touch zone 253 is first turned on. This is to facilitate a user to determine whether a touch signal is generated from a specific touch zone.

Optionally, when the turned-on LED is turned off, the LED can be controlled to dim its light gradually.

The first user input unit 200 shown in FIG. 14 (b) can further include a diffusing member 230.

According to the embodiment shown in FIG. 14 (b), the diffusing member 230 is further provided between the transmittive film 220 or the 3D member 210 and the rubber board 240.

In this case, the diffusing member 230 includes a plurality of diffusing portions 231 and a shield portion 233 except the diffusing portions 231.

The light diffusing portion of the diffusing member 230, i.e., the diffusing portion 231 can be formed of such a semi-transparent material as plastic and the like. If the diffusing portion 231 is formed of ABS resin, to which pigment or the like is added, light transmitted via the diffusing member 230 diffuses into the identity symbol 221 of the transmittive film 220 with uniform brightness. Hence, in case of observing the first user input unit 200 above the 3D member 210, it is able to obtain a uniform illumination effect.

The diffusing member 230 enables the light emitted from the LED 251 to smoothly diffuse and is able to play a role in enhancing uniformity of the emitted light at the identity symbol 221 irrespective of a size of the LED 251.

The characters or symbols printed or coated on the bottom surface of the 3D member 210 or the characters or symbols printed on the separate transmittive film 220 can have various shapes. Since a size of the LED 251 provided under the character or symbol, e.g., a size of an LED device fails to precisely match a position or size of the shape or size of the corresponding character or symbol, the diffusing member 230 is necessary to enable the identity symbol 221, which includes the corresponding character or symbol of the 3D member 210, to uniformly emit light in case of light emission of the LED 251.

As the illumination of one identity symbol 221 becomes uniform, the diffusing member 230 is able to play a role in enhancing a quality of illumination.

Moreover, the diffusing member 230 shown in FIG. 14 includes the diffusing portion 231 and the shield portion 233 for cutting of the light transmission. The shield portion 233 cuts off the interference of the lights provided by the LEDs 251, thereby enabling the corresponding identity symbol to emit light selectively.

In this case, the rubber board 240 eliminates the recess existing between the circuit board 250 and the diffusing member 230 and enables the circuit board 250 and the diffusing member 230 to be attached thereto.

As mentioned in the foregoing description, the diffusing member 230 enables the light to diffuse smoothly and the diffusing portion 231 or the shield portion 233 selectively cuts off or transmits the light to play a role in preventing the lights, which are generated from the LEDs 251 provided to the touch zones 253 by being spaced apart from each other, from interfering with each other.

The diffusing portion 231 is a region for diffusing or transmitting light, while the shield portion 233 is a peripheral region of the diffusing portion to cut off the diffusion of light.

In case that the LED 251 provided on the circuit board 250 emits light, the identity symbol 221 of the transmittive film 220 or the 3D member 210 in the touch input applied touch input zone in the 3D member 210 can emit light only.

Therefore, the shield portion 233 provided between the diffusing portions 231 of the diffusing member 230 prevents the light, which is emitted from the LED 251 loaded in the specific touch zone 253, from being supplied to the identity symbol 221 on another touch zone 253.

Although a touch input is applied to a specific touch input zone 212, if the light emitted from the LED 251 is emitted via the identity symbol 221 of the transmittive film 220, it is unable to check whether the touch input is correctly applied via the illumination function.

Therefore, the shield portion 233 can be provided to selectively cut off the light emitted from the LED 251. In this case, the shield portion 233 can be a portion of the diffusing member 230 coated with a shield material (e.g., paint) to prevent the light from being transmitted.

Optionally, the shield portion of the diffusing member 230 can be formed of a material for preventing light from being transmitted.

FIG. 15 is a cross-sectional diagram of the first user input unit of the mobile terminal shown in FIG. 11. Redundant description of the parts shown in FIG. 14 shall be omitted from the following description.

Referring to FIG. 15, the circuit board is partitioned into a plurality of touch zones. And, each of the touch zones 253(1), 253(2) and 253(3) can be provided with a touch sensor. In particular, an independent touch sensor is loaded in each of the touch zones 253(1), 253(2) and 253(3) of the first user input unit 200 shown in FIG. 14. After each of the independent touch sensors has been connected to a touch control unit 800, if a touch input is applied, it is able to generate a touch signal.

The touch control unit 800 forwards the touch signal to an LED control unit 700 configured to control the LED 251 to be turned on/off. Subsequently, the LED control unit 700 controls the LED 251 provided to each of the touch zones 253(1), 253(2) and 253(3).

In case that the touch sensor of the circuit board 250 detects a touch input, the LED control unit 700 is able to control the LED 251 to be turned on/off. For instance, in case that the touch sensor of the circuit board 250 detects a touch input, the LED control unit 700 is able to activate the corresponding LED 251.

For clarity and convenience, the above description is made in a manner of discriminating the touch control unit 800 playing a role in receiving a touch input and then generating a control signal corresponding to the received touch input from the LED control unit 700 for controlling the LED 251 to be turned on/off. Alternatively, the controller 180 shown in FIG. 1 receives a touch input and is then able to control the LED 251 to be turned on/off.

The touch control unit 800 detects a touch signal applied to a specific touch zone 253 from the touch sensor (not shown in the drawing) loaded in each of the partitioned touch zones 253 of the circuit board 250.

Therefore, the LED control unit 700 is able to control the LED 251, which is loaded in the corresponding touch zone 253, to be turned on or off by a preset mechanism according to the touch signal.

For instance, if the touch sensor detects the touch input to the specific touch zone 253, the touch control unit 800 generates a touch signal of the specific touch zone 253 and then forwards the touch signal to the LED control unit 700. The LED control unit 700 then turns on the LED 251 corresponding to the corresponding touch zone 253 only or is able to turn on all of the LEDs 251.

As mentioned in the foregoing description, the transmittive film 220 can be provided under the 3D member 210. And, the diffusing member 230 can be provided to diffuse the light emitted from the LED 251.

A size of the diffusing portion 231 can be set enough to cover the whole identity symbol 221. The shield portion 233 cut off the light supplied from the LED 251 in order for the light not to be supplied to the transmittive hole of the touch input zone 212 over another touch zone 253.

The rubber board 240 is provided between the diffusing member 230 and the circuit board 250 having the LED 251 loaded thereon to attach the diffusing member 230 and the circuit board 250 thereto. The rubber board 240 is configured to enclose a lateral side of the LED 251 and includes an opening 241 configured to enable a top side of the LED 251 to be exposed toward the diffusing portion 231 of the diffusing member 230.

The rubber board 240 including the opening 241 prevents the light, which is supplied from the LED 251, from leaking toward a lateral side of the LED 251 while the LED 251 is loaded in the opening 241. And, the rubber board 240 also plays a role in eliminating a recess that may be generated by the LED 251 or enabling the circuit board 250 and the diffusing member 230 to closely adhere or attach to each other.

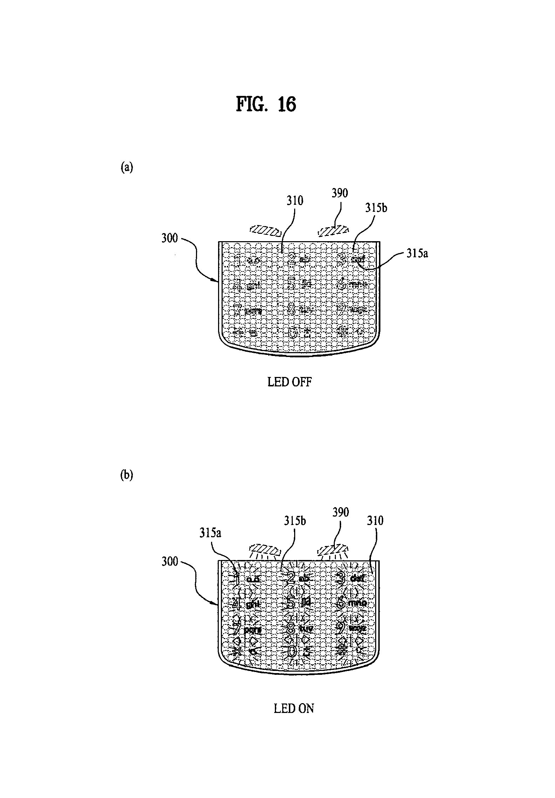

FIG. 16 is a layout of the second user input unit of the mobile terminal shown in FIG. 11.

Referring to FIG. 16, like the first user input unit 200, the second user input unit 300 includes a 3D member 310 provided to its most upper part. Yet, the second user input unit 300 differs from the first user input unit 200 in that an identity symbol, character or numeral 315a is printed on a transparent sheet (not shown in the drawing) configuring the 3D member 310 together with a pattern 315b.

Referring to FIG. 16 (b), if an LED 390 configured to supply light via a light guide film is turned on, the identity symbol, character or numeral 315a can provide a 3D effect as well as a fancy look.

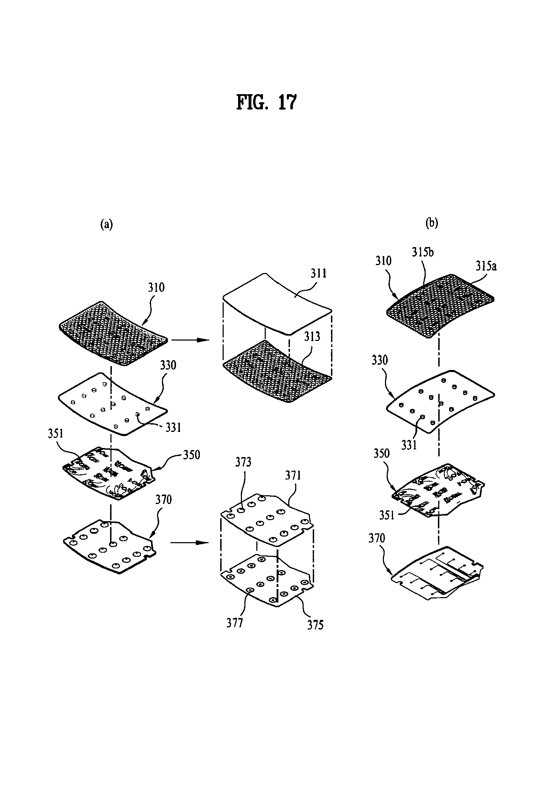

FIG. 17 is an exploded perspective diagram of the second user input unit of the mobile terminal shown in FIG. 11.

In particular, FIG. 17 (a) is a perspective diagram for an exploded configuration of the second user input unit 300, which is viewed from a top side. And, FIG. 17 (b) is a perspective diagram for an exploded configuration of the second user input unit 300, which is viewed from a bottom side.

First of all, the second user input unit 300 is provided in a manner that a 3D member 310, a light guide film 350, a circuit board 370 having a dome switch 373 and an electrode part 377 and the like are stacked on one another.

As mentioned in the foregoing description, the 3D member 310 includes a lens sheet 311 and a transparent sheet 313 provided under the lens sheet 311. In this case, convex lenses are arranged in a grid form on the lens sheet 311. And, a pattern of a specific shape is printed on a bottom surface of the transparent sheet 313. The redundant details described with reference to FIG. 4 shall be omitted from the following description.

The 3D member 310 is formed of a plastic resin material having prescribed elasticity. Since a thickness of the 3D member 310 is small, in case that a top side of the 3D member 310 is pressurized, the dome switch 373 under the 3D member 310 is pressurized as well to generate an input signal.

And, an identity symbol, character or numeral 315a and a pattern 315b of a specific shape can be printed on a bottom surface of the transparent sheet configuring the 3D member 310.

The redundant details of the 3D member 310, on which the identity symbol, character or numeral 315a and the pattern 315b of the specific shape are printed, described with reference to FIG. 4 shall be omitted from the following description.

The user input unit shown in FIG. 17 is provided with the dome switch 373 to detect a user's pressurization input, whereas the user input unit shown in one of FIGs. 13 to 16 is a touchpad type user input unit.

In case that a plurality of dome switches 373 are provided to the circuit board 370 of the user input unit 300, a rubber board 330 can be further provided between the 3D member 310 and the circuit board 370. In this case, a plurality of projections 331 is formed on a bottom surface of the rubber board 330 to oppose a plurality of the dome switches 373, respectively.

In particular, the rubber board 330 can be provided under the 3D member 310. A plurality of the projections 331 are projected on the rubber board 330. In case that a specific zone of the 3D member 310 is pressurized, a corresponding on of a plurality of the projections 331 pressurizes the corresponding dome switch 373.

A light guide film 350 is provided under the rubber board 330. In this case, a plurality of perforated holes 351 are formed on the light guide film 350 to be penetrated by a plurality of the projections of the rubber board 330, respectively. And, at least one LED 390 shown in FIG. 16 can be provided next to a lateral side of the light guide film 350.

Therefore, the projection 331 formed on the rubber board 330 penetrates the perforated hole 351 of the light guide film 351 and then pressurizes the corresponding dome switch 373.

Thus, the light guide film 350 is provided under the rubber board 330.

The light guide film 350 is provided as a film formed of a transparent material. In this case, the transparent material can include one of polycarbonate, polyurethane and the like.

If a specific zone of the 3D member 310 is pressurized, the projection 331 for pressurizing the dome switch 373 of the circuit board 370 penetrates the perforated hole 351 formed in the light guide film 350 and is then projected toward the dome switch 373.

If the light guide film 350 is adopted, the number of the LEDs (cf. '390' in FIG. 16) provided for an illumination function can be considerably reduced and the corresponding thickness can be slimmed as well. If the perforated hole 351 of the light guide film 350 is not provided, a pressurization force, which is generated by pressurizing the 3D member 310, for pressurizing the dome switch 373 via the projection 331 of the rubber board 330 is weakened. And, a manipulation feel may be degraded.

In order to solve the problem of the degraded manipulation feel, in the mobile terminal according to the present invention, the perforated hole 351 is formed at the light guide film 350 adopted to provide the illumination function. In particular, the perforated hole 351 is formed at a location opposing the projection 331. Hence, the projection 331 penetrates the perforated hole 351 and is then able to pressurize the corresponding dome switch.

Meanwhile, the rubber board 330 can be formed of such a soft material as rubber and the like.

Preferably, a projected height of the projection 331 is set enough to pressurize the corresponding dome switch 373 without consumption of a considerable force in case of pressurizing the manipulating button 215 of the 3D member 310 after the 3D member 310, the light guide film 350 and the circuit board 370 have been assembled together.

Since the projection 331 needs to selectively pressurize the corresponding dome switch 373 by penetrating the perforated hole 351 of the light guide film 350 provided under the 3D member 310, it can be formed to have a projected height equal to or greater than a thickness of the light guide film 350.

As mentioned in the foregoing description, the perforated hole 351 formed in the light guide film 350 can have a circular shape, an oval shape or the like. Since the projection 331 can be inserted in a wider part of the perforated hole 351, a cross-sectional shape of the projection 331 should have a shape that can be inserted in the perforated hole 351.

For instance, the projection 331 can be formed in a cylindrical shape.

The projection 331 of the rubber board 330 is located at a position that opposes the perforated hole 351 of the light guide film 350 and the dome switch 373 and the electrode part 377 of the circuit board 370 and is then able to generate a control signal by a contact between the dome switch 373 and the electrode part 377 according to the pressurization of the 3D member 310.

The circuit board 370 can include a board 375 provided with a plurality of electrode parts 377 and an attachment film 371 having the dome switch 373 provided to the position opposing the corresponding electrode part 377 coming into contact with the dome switch 377 if the corresponding electrode part 377 is pressurized. The attachment film 371 provided with the dome switch 373 is attached to the board 375 having the electrode part 377, thereby constructing a single circuit board 370.

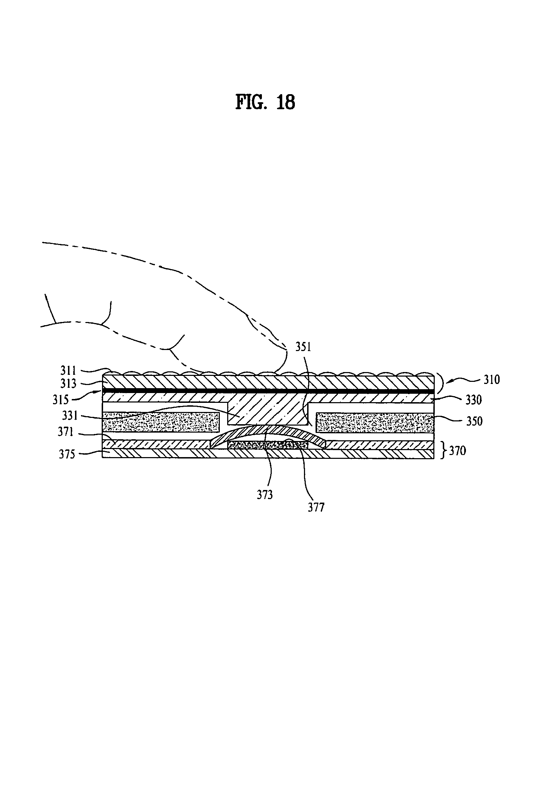

FIG. 18 is a cross-sectional diagram of a second user input unit of the mobile terminal shown in FIG. 11. The redundant descriptions with reference to FIGs. 15 to 17 shall be omitted from the following description.

Referring to FIG. 18, the second user input unit 300 of the mobile terminal according to the present invention is an input unit configured to input various numerals, characters and/or symbols. And, the numerals, characters and/or symbols can be formed on the bottom surface of the transparent sheet configuring the 3D member 310 together with a pattern of a specific shape. In particular, the pattern of the specific shape printed on the bottom surface of the transparent sheet provides a 3D effect due to an enlargement effect by the lens sheet configuring the top side of the 3D member 310, thereby implementing diverse visual effects.

Under the above configured 3D member 310, a rubber board 330 having a projection 331 is provided.

The projection 331 is projected from a bottom surface of the rubber board 330. The projection 331 is projected downward in a manner of penetrating a perforated hole 351 of a light guide film 350. In this case, the light guide film 350 is inserted between the circuit board 370 and the 3D member 310 to provide an illumination function.

Therefore, if a specific zone of the 3D member 310 is pressurized, the projection 331 pressurizes the dome switch 373. The pressurized dome switch 373 selectively comes into contact with an electrode part 377 to generate a control signal.

Meanwhile, the light guide film 350 can be formed of a flexible film material. Even if a projected height of the projection 331 is smaller than a thickness of the light guide film 350, the dome switch 373 can be pressurized with a strong force. Yet, if the projected height of the projection 331 is set greater than the thickness of the light guide film 350, it is able to enhance user's feel of manipulation.

Thus, since the 3D member 310 is provided over the second user input unit 300, an identity symbol, character, numeral and/or the like is printed on a position corresponding to a focal distance of the lens sheet. Therefore, it is able to obtain a visual effect as if the identity symbol, character, numeral and/or the like is floating on a pattern of a specific shape. And, an illumination function can be provided as well.

Accordingly, the present invention provides the following effects and/or advantages.

First of all, the present invention is able to provide a mobile terminal having an exterior and/or user input unit provided with various visual effects including a 3D effect.

Secondly, the present invention diversifies designs of a front face, surface housing and/or user input unit of a mobile terminal, thereby enhancing user's interest and satisfaction.

Thirdly, the present invention enables a surface housing and/or user input unit of a mobile terminal to be configured with a 3D effect and also provides an illumination function thereto, thereby further providing the surface housing and/or user input unit with fancy and colorful visual effects.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100) comprising:
a display unit (151);
a control unit configured to control the display unit (151);
a body configured to load the display unit (151); and
a 3D (3-dimensional) member (10, 210, 310) provided to at least one partial region of the body, the 3D member (10, 210, 310) including:
a lens sheet (11, 211, 311) configured to arrange convex lenses (111) in a grid form, and
a transparent sheet (13, 213, 313) provided under the lens sheet (11, 211, 311), wherein a pattern (15b, 215b, 315b) of a specific shape is printed on a position corresponding to a focal distance (d(f)) of the convex lenses (111) of the lens sheet (11, 211, 311).

2. The mobile terminal (100) of claim 1, wherein the pattern (15b, 215b, 315b) of the specific shape is printed on a bottom surface of the transparent sheet (13, 213, 313).

3. The mobile terminal (100) of any preceding claim, wherein an identity symbol, character or numeral (15a, 315a) for indicating a type of a user input is printed on the bottom surface of the transparent sheet (13, 213, 313) of the 3D member (10, 210, 310), the pattern (15b, 215b, 315b) of the specific shape is enlarged to appear greater than a real size by the convex lenses (111) and the identity symbol, character or numeral (15a, 315a) appears in a real size.

4. The mobile terminal (100) of any preceding claim, further comprising:
a light source unit configured to provide an illumination to the 3D member (10, 210, 310), the light source unit including at least one LED (51, 251, 390).

5. The mobile terminal (100) of claim 4, wherein the body includes at least one housing (102) having at least one opening (102S) and the 3D member (10) is loaded in the at least one opening (102S) of the at least one housing (102).

6. The mobile terminal (100) of claim 5, further comprising:
a light guide plate (20) located under the 3D member (10), and configured to receive light from the at least one LED (51) of the light source unit and to provide an illumination to the 3D member (10), wherein the light source unit is provided next to a lateral side of the light guide plate (20).

7. The mobile terminal (100) of claim 6, wherein the light source unit is located under the housing (102).

8. The mobile terminal (100) of claim 7, wherein the light guide plate (20) is extended under the housing (102).

9. The mobile terminal (100) of any of claim 6 to claim 8, wherein a thickness of the light guide plate (20) is inverse proportional to a distance from the light source unit.

10. The mobile terminal (100) of any of claim 6 to claim 9, wherein a light extracting pattern is formed on a top or bottom surface of the light guide plate (20) in density proportional to a distance from the light source unit.

11. The mobile terminal (100) of claim 4, further comprising:
a user input unit (200) configured to receive touch input including:
the 3D member (210) on a most upper part of the user input unit (200),
a circuit board (250) provided under the 3D member (210) configured to receive the touch input and to convert the received touch input to touch signals, the circuit board (250) having a plurality of touch sensors, wherein the light source unit (251) is loaded on the circuit board (250),
a transmittive film (220) provided between the 3D member (210) and the circuit board (250), and configured to selectively emit light according to the received touch input, and
a rubber board (240), provided between the 3D member (210) and the circuit board (250), configured to transfer light emitted from the light source unit (251) upward and to attach the 3D member (210) or the transmittive film (220) to the circuit board (250).

12. The mobile terminal (100) of claim 11, wherein the rubber board (240) includes a plurality of openings (241), through which the light source unit (251) penetrates.

13. The mobile terminal (100) of claim 11 or claim 12, wherein the circuit board (250) is partitioned into a plurality of touch zones (253) and each of the plurality of touch zones (253) includes the touch sensors.

14. The mobile terminal (100) of any of claim 11 to claim 13, wherein the user input unit (200) further includes a diffusing member (230), located between the 3D member (210) and the circuit board (250), the diffusing member (230) including:
a plurality of diffusing portions (231) configured to diffuse a light provided by the light source unit (251); and
a plurality of shield portions (233) configured to cut off the light provided by the light source unit (251).

15. The mobile terminal (100) of claim 4, further comprising:
a circuit board (370) provided under the 3D member (310), the circuit board (370) having a plurality of dome switches (373); and
a light guide film (350) provided between the 3D member (310) and the circuit board (370),
wherein the light source unit (390) is provided next to a lateral side of the light guide film (370).
